Europäisches Patentamt

European Patent Office

Office européen des brevets

(11) Publication number: **0 510 742 A1**

## EUROPEAN PATENT APPLICATION

(21) Application number: **92200819.8**

(22) Date of filing: **20.03.92**

(51) Int. Cl.5: **F16D 55/2265**

(30) Priority: **22.04.91 GB 9108578**

(43) Date of publication of application:
**28.10.92 Bulletin 92/44**

(84) Designated Contracting States:
**AT BE CH DE DK ES FR GR IT LI LU NL PT SE**

(71) Applicant: **GENERAL MOTORS FRANCE**
**56 à 68 Avenue Louis Roche**
**F-92231 Gennevilliers Paris(FR)**

(72) Inventor: **Dick, Jean Marc**
**7 Rue du President Kennedy**
**F-95120 Ermont(FR)**
Inventor: **Caille, Daniel**
**Le Haut de la Ruelle de Creil**
**F-60530 Ercuis(FR)**

(74) Representative: **Denton, Michael John et al**
**Patent Section 1st Floor Gideon House 28**
**Chapel Street**
**Luton Bedfordshire LU1 2SE(GB)**

(54) Protection cap for a part of a disc brake.

(57) A disc brake (10) for mounting on a stationary support (15) of a motor vehicle comprising a caliper (12) slidably mountable on the stationary support; at least one pin (14) fixable to the stationary support and slidably positioned in an axial bore (16) in the caliper to extend therethrough for slidably mounting the caliper; a sealing boot (36) having a first end (38) positioned in the axial bore in sealing engagement with the axial bore, the other end (40) sealingly engaging the pin outside the axial bore, with an elastomeric bellows portion (42) extending between the two ends, the other end being directable towards the stationary support; and a protection cap (30) gripping the pin and to be positioned between the sealing boot and the stationary support, the protection cap comprising two or more teeth, the free edge of each tooth being directed inwardly to resiliently grip the pin. Reduces risk of damage to the sealing boot.

Fig.1.

Fig.2.

EP 0 510 742 A1

This invention relates to a disc brake for a motor vehicle, and to a protection cap for a sealing boot for the disc brake.

Disc brakes are known which comprise a caliper slidably mounted on a stationary support (for example, the steering knuckle) mounted on a motor vehicle, and at least one pin fixed to either the stationary support or the caliper and slidably inserted into an axial bore in the other for slidably mounting the caliper. In such arrangements it is known to provide an elastomeric sealing boot at one or both ends of the pin. A first end of the or each sealing boot is positioned in the axial bore between the surface of the axial bore and the pin. The other (second) end of the sealing boot sealingly engages the pin outside the axial bore. A bellows portion connects the two ends of the sealing boot. Such a known arrangement is shown in GB Patent No. 1494796.

The first end of the sealing boot is usually in the form of a block of elastomeric material, and is usually positioned in a groove in the axial bore but still in engagement with the pin. This arrangement allows relative sliding of the pin with respect to the axial bore in an axial direction, whilst still providing a seal with the axial bore. The block of material also allows limited relative radial movement which compensates for any small variations in manufacturing tolerances. The sealing boot is such that it damps any relative movement between the pin and the axial bore.

The sealing boot positioned adjacent the stationary support (at the end of the pin directed towards the rotor) can be damaged by knocks either during assembly of the disc brake, or during transportation of the disc brake, or with the stationary support. Such damage allows ingress of dirt and moisture between the pin and the surface of the axial bore, thereby preventing, or interfering with, the sliding of the caliper.

As a means of protecting the sealing boot, a protection cap has been designed for mounting on the pin between the sealing boot and the stationary support. A known form of protection cap is shown in GB Patent Application No. 2174157A. This known arrangement is both difficult to manufacture and difficult to assemble on the disc brake, due to the U-shaped section within which the other end of the sealing boot is positioned.

It is an object of the present invention to overcome the above mentioned disadvantages.

To this end, a disc brake for mounting on a stationary support of a motor vehicle in accordance with the present invention comprises a caliper slidably mountable on the stationary support; at least one pin fixable to the stationary support and slidably positioned in an axial bore in the caliper to extend therethrough for slidably mounting the caliper; a sealing boot having a first end positioned in the axial bore in sealing engagement with the axial bore, the other end sealingly engaging the pin outside the axial bore, with an elastomeric bellows portion extending between the two ends, the other end being directable towards the stationary support; and a protection cap gripping the pin and to be positioned between the sealing boot and the stationary support, wherein the protection cap comprises two or more teeth, the free edge of each tooth being directed inwardly to grip the pin.

Preferably, the teeth are substantially equidistantly spaced.

The teeth are preferably directly inwardly at an angle to the pin. Alternatively, the teeth are directed inwardly substantially perpendicular to the pin.

Preferably, the teeth make a snap-fit in a circumferentially extending groove in the pin.

The protection cap preferably comprises an outer wall, an inner wall defining a central aperture through which the pin passes, and an intermediate wall interconnecting the inner and outer walls. In this case, the inner wall is preferably substantially U-shaped in cross-section and comprises a free edge directed away from the sealing boot with the said two or more teeth formed therein.

Preferably, the protection cap has six teeth.

The protection cap is preferably made of resilient material.

The present invention also includes a protection cap for use in a disc brake as herein defined, the protection cap being substantially annular and comprising two or more teeth, the free edge of each tooth being directed inwardly to grip the pin of the disc brake.

The present invention will now be described, by way of example, with reference to the accompanying drawings, in which:-

Figure 1 is a side view, partially cut away, of a preferred embodiment of disc brake in accordance with the present invention;

Figure 2 is a cross-sectional view of the hollow sleeve of the pin, the sealing boots and the protection cap on the line II-II of Figure 1;

Figure 3 is an enlarged view of one end of the arrangement shown in Figure 2;

Figure 4 is an end view of the protection cap shown in Figure 2;

Figure 5 is a cross-sectional view taken in the line V-V of Figure 4;

Figure 6 is an enlarged view of the area VI in Figure 5;

Figure 7 is an end view of an alternative protection cap for use in an alternative embodiment of a disc brake in accordance with the present invention;

Figure 8 is a cross-sectional view taken in the line VIII-VIII of Figure 7;

Figure 9 is an enlarged view of the area IX in Figure 8; and

Figure 10 is an enlarged view of a view similar to that of Figure 3 for the alternative embodiment of disc brake.

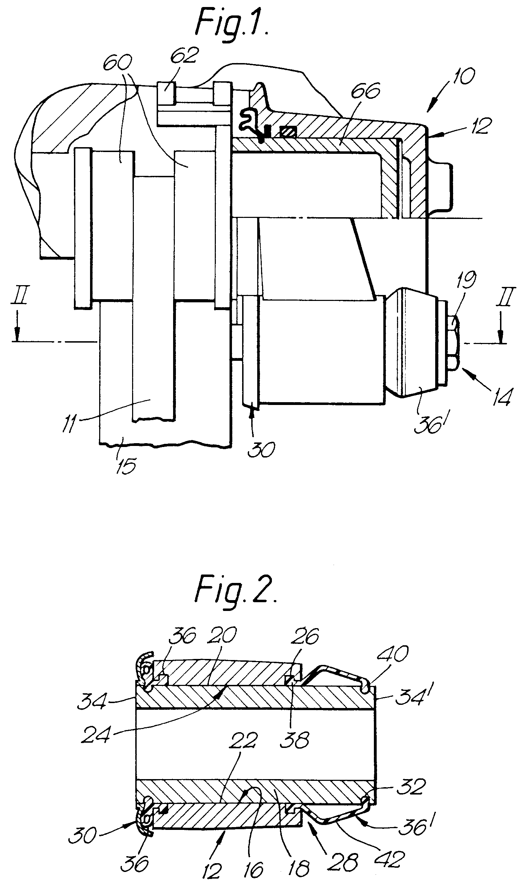

Referring to Figures 1 and 2 of the accompanying drawings, the disc brake 10 comprises a caliper 12 which is slidably mountable on a stationary support 15 (which may be a steering knuckle) to straddle a rotor 11. The slidable mounting is provide by two pins 14 (only one of which is shown) which are spaced apart, and each of which is slidably positioned in an axial bore 16 in the caliper 12. Each pin 14 is defined by a hollow sleeve 18 of steel and a bolt 19 which passes through the hollow sleeve and is screw threaded to the stationary support 15. Each hollow sleeve 18 extends through its respective axial bore 16 and has an outer surface 20 in sliding engagement with a central portion 22 of the surface 24 of the axial bore.

The surface 24 of each axial bore 16 also includes a groove 26 at or adjacent each open end 28 of the axial bore. The hollow sleeve 18 also has a groove 32 in its outer surface 20 at or adjacent each end 34,34' of the hollow sleeve.

The disc brake 10 also includes a sealing boot 36,36' at each open end 28 of each axial bore 16 which substantially prevents dirt and/or moisture penetrating the area between the outer surface 20 of the hollow sleeve 18 and the surface 24 of the axial bore 16. Each sealing boot 36,36' comprises a first end 38 which is positioned in the groove 26 at the respective open end 28 of the axial bore 16, with the other end 40 of the sealing boot being positioned in the respective groove 32 in the hollow sleeve 18 to make a sealed engagement therewith. Each sealing boot 36,36' also includes a bellows portion 42 extending between the first end 38 and the other end 40. The bellows portion 42 is flexible and allows for relative axial movement between the first end 38 and the other end 40 of the sealing boot 36,36' as the pin 14 slides relative to the axial bore 16 in the axial direction. This arrangement damps relative movement in the axial direction between the pin 14 and the axial bore 16. A retracted form of the bellows portion 42 is shown for the left sealing boot 36 as viewed in Figure 2, and an expanded form is shown for the right sealing boot 36'. The sealing boots 36,36' are moulded or otherwise formed from elastomeric material.

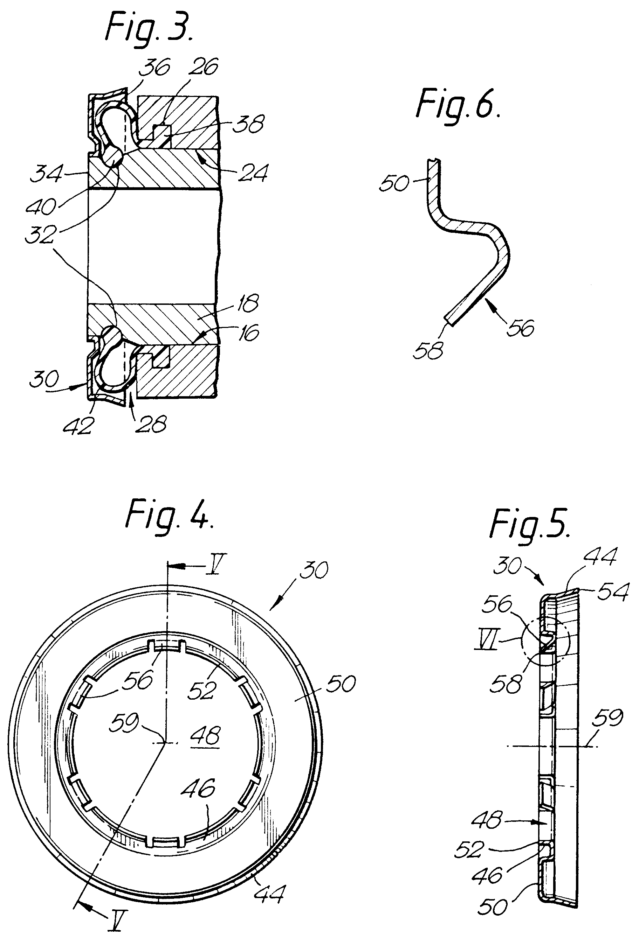

In accordance with the present invention, a protection cap 30 is secured to hollow sleeve 18 at or adjacent the end 34 which is directed towards the stationary support 15. The protection cap 30 is shown in more detail in Figures 4 to 6 and has a substantially annular configuration. The protection cap 30 has a tapered outer wall 44 extending substantially axially, and inner wall 46, a central aperture 48 defined by the inner wall through which the hollow sleeve 18 of the pin 14 passes, and an intermediate wall 50 connecting the outer wall and the inner wall and extending substantially radially. The inner wall 46 is bent into a substantially U-shaped cross-section with the arms of the U extending substantially axially, and has a free edge 52 directed away from the sealing boot 36. The outer wall 44 has a free edge 54 directed away from the stationary support 15. A number (preferably six) of teeth 56 are formed in the inner wall 46 and are substantially equally spaced around the inner wall. Each tooth 56 has a free edge 58 which is directed inwardly at an angle towards the central axis 59 of the protection cap 30. In use, the free edges 58 resiliently grip the hollow sleeve 18 to secure the protection cap 30 in place. The teeth 56 either resiliently grip the outer surface 20 of the hollow sleeve 18 as shown, or may make a snap-fit in the groove 32, or may make a snap-fit in a separatley formed groove (not shown). The protection cap 30 is formed from any suitable resilient material, such as a metallic alloy or a plastics material. The protection cap substantially prevents the sealing boot 36 being damaged by accidental knocking, is easy to manufacture (for example, by stamping from sheet metal in one stamping action), and is easy to install (as it is not attached in any way to the sealing boot).

The disc brake 10 shown in Figure 1 also includes a hydraulically actuable piston 66, and a pair of brake shoes 60 with associated anti-rattle springs 62 as is well known to those skilled in the art. The protection cap can also be used on other forms of disc brake which have a pin-slide arrangement.

The sealing boots 36,36' may be replaced by the sealing boots shown in GB Patent Application No. 8901917.8 (Publication No. 2,230,061A).

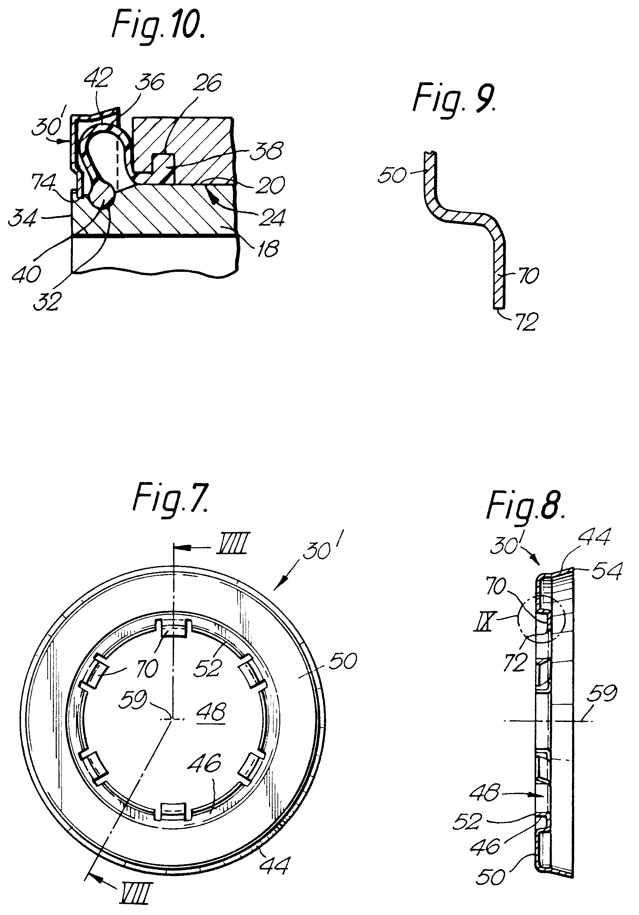

An alternative embodiment of disc brake in accordance with the present invention is now described with reference to Figures 7 to 10. In this alternative embodiment, like parts have been given the same reference numeral as those parts shown in Figures 1 to 6. A modified protection cap 30' is used in this alternative embodiment. In this case, the teeth 70 in the inner wall 46 are directed substantially radially and have a free edge 72 which is directed inwardly (substantially parallel to the intermediate wall 50) towards the central axis, rather than being at an angle. On assembly (Figure 10), the free edge 72 of each tooth 70 makes a snap-fit in a groove 74 in the outer surface 20 of the hollow sleeve 18 which groove 74 extends circumferentially and is positioned adjacent to, and spaced from, the groove 32. As an alternative arrangement, in certain applications, the teeth 70 may make a snap-fit in the groove 32.

Compared to the protection cap shown in GB Patent Application No. 2174157A, the present invention has the advantage that it is easier to manufacture in terms of being stampable from sheet metal in a single operation, or mouldable in one-piece from resilient plastics material. Further, the arrangement of the teeth makes it easier to install the protection cap on the pin. Further still, there is no requirement for the other (second) end of the sealing boot to be positioned within a U-shaped part of the protection cap, which also make assembly easier.

**Claims**

1. A disc brake (10) for mounting on a stationary support (15) of a motor vehicle comprising a caliper (12) slidably mountable on the stationary support; at least one pin (14) fixable to the stationary support and slidably positioned in an axial bore (16) in the caliper to extend therethrough for slidably mounting the caliper; a sealing boot (36) having a first end (38) positioned in the axial bore in sealing engagement with the axial bore, the other end (40) sealingly engaging the pin outside the axial bore, with an elastomeric bellows portion (42) extending between the two ends, the other end being directable towards the stationary support; and a protection cap (30,30') gripping the pin and to be positioned between the sealing boot and the stationary support; characterised in that the protection cap (30,30') comprises two or more teeth (56,70), the free edge (58,72) of each tooth being directed inwardly to grip the pin.

2. A disc brake as claimed in Claim 1, wherein the teeth (56,70) are substantially equidistantly spaced.

3. A disc brake as claimed in Claim 1 or Claim 2, wherein the teeth (56) are directly inwardly at an angle to the pin (14).

4. A disc brake as claimed in Claim 1 or Claim 2, wherein the teeth (70) are directed inwardly substantially perpendicular to the pin (14).

5. A disc brake as claimed in any one of Claims 1 to 4, wherein the teeth (70) make a snap-fit in a circumferentially extending groove (74) in the pin (14).

6. A disc brake as claimed in any one of Claims 1 to 5, wherein the protection cap (30,30') comprises an outer wall (44), an inner wall (46) defining a central aperture (48) through which the pin (14) passes, and an intermediate wall (50) interconnecting the inner and outer walls.

7. A disc brake as claimed in Claim 6, wherein the inner wall (46) is substantially U-shaped in cross-section and comprises a free edge (52) directed away from the sealing boot (36) with the said two or more teeth (56,70) formed therein.

8. A disc brake as claimed in any one of Claims 1 to 7, wherein the protection cap (30,30') has six teeth (56,70).

9. A disc brake as claimed in any one of Claims 1 to 8, wherein the protection cap (30,30') is made of resilient material.

10. A protection cap for use in a disc brake (10) as claimed in any one of Claims 1 to 9, the protection cap (30,30') being substantially annular and comprising two or more teeth (56,70), the free edge (58,72) of each tooth being directed inwardly to grip the pin (14) of the disc brake.

## Fig.1.

## Fig.2.

Fig. 3.

Fig. 6.

Fig. 4.

Fig. 5.

# Fig.10.

# Fig. 9.

# Fig.7.

# Fig.8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 052 543 (0.B.A.) <br> * page 5, line 18 - line 23; figures 3A-C * <br> --- | 1 | F16D55/2265 |
| A | EP-A-0 253 707 (BENDIX FRANCE) <br> --- | | |
| D,A | GB-A-2 174 157 (TEVES) <br><br> ----- | | |

**TECHNICAL FIELDS SEARCHED (Int. Cl.5 )**

F16D

The present search report has been drawn up for all claims

| Place of search | Date of completion of the search | Examiner |
|---|---|---|
| BERLIN | 26 JUNE 1992 | LUDWIG H.J. |